# EUROPÄISCHE PATENTSCHRIFT

(11) **EP 1 605 023 B1**
(45) Veröffentlichungstag und Bekanntmachung des Hinweises auf die Patenterteilung: **11.07.2012**
(21) Anmeldenummer: 05010096.5
(22) Anmeldetag: 10.05.2005
(51) Int. Cl.: C09C 1/24, C01G 49/06

(54) **Farbreine, gut dispergierbare Eisenoxidrotpigmente mit hoher Mahlstabilität**
High purity color and well dispersible red iron oxide pigments with high stability against milling
Pigments rouges à base d'oxyde de fer avec une haute pureté de couleur et facilement dispersibles et ayant une grande stabilité de broyage

(30) Priorität: 14.05.2004 DE 102004024013
(43) Veröffentlichungstag der Anmeldung: 14.12.2005
(73) Patentinhaber: LANXESS Deutschland GmbH, 51369 Leverkusen (DE)
(72) Erfinder: Rosenhahn, Carsten, Dr., 47799 Krefeld (DE); Burow, Wilfried, Dr., 47809 Krefeld (DE); Schneider, Volker, Dr., 51515 Kürten (DE)

(56) Entgegenhaltungen:
- EP-A- 0 199 975
- DE-A1- 3 716 300

## Beschreibung

Die vorliegende Erfindung betrifft farbreine, gut dispergierbare Eisenoxidrotpigmente mit hoher Mahlstabilität, ein Verfahren zu ihrer Herstellung sowie deren Verwendung.

Eisenoxidrotpigmente werden universell als farbgebende Komponenten in der Farben-, Lack-, Beschichtungs-, Baustoff-, Kunststoff- und Papierindustrie eingesetzt.

Eisenoxidrotpigmente haben Vorteile gegenüber organischen Rotpigmenten. Sie sind nach kostengünstigen Herstellverfahren erzeugbar, sind ökologisch unbedenklich, lichtbeständig, besser dispergierbar und schützen eingefärbte Gegenstände vor schädlicher UV-Strahlung.

An die Eisenoxidrotpigmente werden hohe Anforderungen hinsichtlich Farbreinheit, Qualitätskonstanz und Verarbeitungsfreundlichkeit (Dispergierbarkeit, Mahlstabilität) gestellt.

In allen Anwendungen zur Einfärbung von Lacken, Dispersionsfarben, Beschichtungen, Kunststoffen, Baustoffen, Papier, in Lebensmitteln sowie in Produkten der Pharmaindustrie sind Eisenoxidrotpigmente gefragt, deren Rotanteil a* (gemessen im Gemisch mit Weißpigmenten - genannt Aufhellung - nach CIELAB) besonders ausgeprägt ist. Je höher der für die Einfärbung bestimmte Rotanteil a* ausfällt, um so farbreiner erscheint der Rotfarbton des eingefärbten Mediums (beispielweise Lack, Kunststoff, Beschichtungen, Baustoff, Papier).

So wird in der Lackindustrie die Forderung gestellt, dass die Einarbeitung der Eisenoxidrotpigmente in ein Lacksystem zur stets gleichen Farbtongebung führt, die möglichst unabhängig von der Dauer der Einarbeitung sein soll. Die Einarbeitung des Eisenoxidrotpigmentes in ein Lacksystem erfolgt in technischen Anlagen, wie z.B. Perlmühlen unter Einwirkung mechanischer Kräfte auf das Pigment, wobei diese Mahlung ggf. Stunden beansprucht. Ein hohes Maß an Farb- bzw. Qualitätskonstanz ist gegeben, wenn sich die Farbgebung des Eisenoxidrotpigmentes bei Schwankungen in der Einarbeitungszeit möglichst geringfügig ändert. Eisenoxidrotpigmente mit einer geringen Farbtonänderung bei Verlängerung der Einarbeitungszeit in einem Lacksystem haben eine hohe Mahlstabilität. Ein Maß für die Farbkonstanz ist der Bunttonabstand Δh ab*, der sich ergibt, wenn man den Buntton von zwei Lackanreibungen vergleicht, die aus den gleichen Lack- und Pigmentrohstoffen in der gleichen technischen Anlage bei unterschiedlich langen Einarbeitungszeiten gewonnen wurden. Hier ist gefordert, dass der resultierende Bunttonabstand Δh ab* so gering wie möglich ist.

Weiterhin wird z.B. in Lack- oder Kunststoffanwendungen die Forderung gestellt, dass sich die Eisenoxidrotpigmente möglichst leicht im Medium als Primärteilchen gleichförmig verteilen, d.h. gut dispergierbar sind. Unerwünscht sind grobe Pigmentteilchen, die in applizierten Lackschichten oder eingefärbten Kunststoffen aufgrund ihrer Teilchengröße zu rauen Oberflächen ("Pickelbildung") oder Störungen führen.

Zur Herstellung roter Eisenoxidpigmente werden allgemein vier Verfahren angewandt (T.C. Patton, Pigment Handbook, Vol. 1, New York 1973, S. 333):
1. Copperas Red Verfahren
   Durch Abspaltung von Wasser und Schwefeloxiden aus Eisensulfat (Copperas) in einem mehrstufigen Prozess erhält man farbreine und gut dispergierbare Eisenoxidrotpigmente mit unzureichender Mahlstabilität.
2. Ferrite Red Verfahren
   Durch Dehydration von gelbem Eisenoxid (Goethit) α-FeOOH erhält man Eisenoxidrotpigmente mit guter Dispergierbarkeit, aber unzureichender Farbreinheit und unzureichender Mahlstabilität.
3. Precipitated Red Verfahren
   Fällt man Eisenoxidrot direkt aus wässriger Lösung, erhält man Eisenoxidpigmente mit guter Dispergierbarkeit, aber unzureichender Farbreinheit und unzureichender Mahlstabilität.
4. Synthetic Red Verfahren
   Durch Oxidation von synthetischem Eisenoxidschwarz (Magnetit) erhält man Eisenoxidrotpigmente mit guter Dispergierbarkeit und guter Mahlstabilität, aber unzureichender Farbreinheit.

Durch eine Reihe technischer Maßnahmen wurde in der Vergangenheit versucht, ausgehend von den bekannten Herstellverfahren verbesserte Eisenoxidfarbpigmente zu erzeugen.

So beschreiben DE 35 121 24 Al und die JP 47923/76 (Tone Sangyo) Verfahren zur Beschichtung von Eisenoxidrotpigmenten mit einer farblosen Beschichtung von 0,5 bis 10 Mol % von Mg, Zn, Al, La, Y, Zr, Sn und Ca (DE 35 121 24 Al) bzw. 0,3 bis 10 % Al (JP 47923/76). Die Beschichtung führt zu Eisenoxidrotpigmenten mit verbesserten Farbeigenschaften gegenüber den unbeschichteten Eisenoxidrotpigmenten, guter Dispergierbarkeit und einem isoelektrischen Punkt > 7. So hergestellte Eisenoxidrotpigmente zeichnen sich durch verringerte Flockung gegenüber den als Ausgangsmaterial verwendeten unbeschichteten Eisenoxidrotpigmenten aus, erreichen jedoch nicht die gewünschte hohe Farbreinheit.

Weiterhin beschreibt EP 0290 908 Al ein Verfahren zur Herstellung farbreiner Eisenoxidrotpigmente mit clusterförmigen Pigmentteilchen. Man erhält diese farbreinen Eisenoxidrotpigmente durch Dehydration von gelbem Eisenoxid (Goethit = α-FeOOH), das nach einem speziellen Fällprozess nicht als nadelfönniges, sondern als spherolythisches Eisenoxidgelb erhalten wurde. Die so erhaltenen Al-haltigen Eisenoxidrotpigmente sind zwar farbreiner als herkömmliche zum Rot verglühte Eisenoxidgelbpigmente und außerdem mahlstabil, lassen sich jedoch nur schwer dispergieren.

Außerdem beschreibt DE 35 00 470 Al ein Verfahren zur Herstellung von farbreinen Eisenoxidrotpigmenten durch Oxidation von Eisenoxidschwarz, das zu farbreineren Pigmenten als bei herkömmlichen auf Basis von herkömmlichem Magnetit hergestellten Eisenoxidrotpigmenten führt. Das Verfahren geht von speziellen, feinteiligen, in Gegenwart von hohen Gehalten an Fe(III) in wässrigen Medien erzeugten Magnetiten aus, die ggf. in Gegenwart von Aluminium- oder Phosphatsalzen erzeugt wurden. Die nach Oxidation erhaltenen Eisenoxidrotpigmente, die ggf. Aluminium oder Phosphor als Massedotierung enthalten, sind mahlstabil und gut dispergierbar, erreichen jedoch nicht die gewünschte Farbreinheit.

Somit wird deutlich, dass man weder auf dem Weg der vier oben genannten Verfahren (T.C. Patton, Pigment Handbook, Vol. 1, New York 1973, S. 333) zur Herstellung roter Eisenoxidpigmente noch durch Verfahrensmodifikationen wie Beschichtung von Eisenoxidrotpigmenten mit farblosen Aluminiumverbindungen, noch durch Dotierung mit Aluminium oder Phosphor zu verbesserten Eisenoxidrotpigmenten kommt, die sich in ihrer vorteilhaften Eigenschaftskombination von hoher Farbreinheit bei gleichzeitiger hoher Mahlstabilität und guter Dispergierbarkeit von herkömmlich bekannten Eisenoxidrotpigmenten unterscheiden.

Der Erfmdung lag die Aufgabe zugrunde, verbesserte Eisenoxidrotpigmente zur Verfügung zu stellen, die sowohl eine hohe Farbreinheit als auch eine hohe Mahlstabilität und gute Dispergierbarkeit aufweisen.

Diese Aufgabe wurde gelöst in Form von Eisenoxidrotpigmenten mit einen a*-Wert, gemessen in Aufhellung (Gemisch mit Weißpaste) nach CIELAB-Einheiten gemäß DIN 6174 nach einer 15-minütigen Anreibung im Olbrich-Shaker von 26,5 bis 30, insbesondere von 26,5 bis 28,5, die bei einer Lackanreibung im Olbrich-Shaker bei einer Erhöhung der Dispergierzeit von 15 auf 120 Min einen Bunttonabstand Δ h ab* gemäß DIN 6174 von < 1,1, insbesondere < 0,8 aufweisen.

Die Eisenoxidrotpigmente weisen vorzugsweise bei einer Lackanreibung im Olbrich-Shaker bei einer Erhöhung der Dispergierzeit von 15 auf 120 Min einen Farbtonabstand Δ a gemäß DIN 6174 von < 0,8, insbesondere < 0,6 auf.

Die Eisenoxidrotpigmente weisen vorzugsweise bei einer Lackanreibung im Olbrich-Shaker bei einer Erhöhung der Dispergierzeit von 15 auf 120 Min einen Farbtonabstand Δ b gemäß DIN 6174 von < 1,8, insbesondere < 1,3 auf.

Die Eisenoxidrotpigmente weisen ferner gegenüber Bayferrox® 110 M bei einer Anreibezeit von 15 Min im Olbrich-Shaker einen vorteilhaften 0,5 bis 4 Einheiten höheren a* -Wert, gemessen in Aufhellung nach CIELAB-Einheiten gemäß DIN 6174, auf. Bevorzugt weisen die Eisenoxidrotpigmente gegenüber Bayferrox 110 M bei einer Anreibezeit von 15 Min im Olbrich-Shaker einen von 0,7 bis 2 Einheiten höheren a* -Wert, gemessen in Aufhellung nach CIELAB-Einheiten gemäß DIN 6174, auf. Die Eisenoxidrotpigmente weisen dabei ferner bei einer Lackanreibung im Olbrich-Shaker bei einer Erhöhung der Dispergierzeit von 15 auf 120 Min einen Bunttonabstand Δ h ab* gemäß DIN 6174 von < 1,1, insbesondere < 0,8, oder einen Farbtonabstand Δ a* gemäß DIN 6174 von < 0,8, insbesondere < 0,6, oder einen Farbtonabstand Δ b* gemäß DIN 6174 von < 1,8, insbesondere < 1,3 auf. Bayferrox® 110 M (CAS-Nr. 1309-37-1 von Bayer Chemicals AG) im Sinne der Erfindung bedeutet ein pulvriges, Fe₂O₃ Rotpigment mit einer Dichte von ca. 5 g/cm³ (bei 20 °C gemessen nach DIN ISO 787/10), und einen pH-Wert von 4-8 bei 50 g/l Wasser in wässriger Suspension gemäß DIN ISO 787/9; es wird als Farbmittel verwendet.

Die Eisenoxidrotpigmente weisen vorzugsweise eine Dispergierbarkeit nach DIN ISO 1524 (2002) in der erweiterten Form als "3-Kästchen-Methode" von besser als 15-25-40 auf.

Die Eisenoxidrotpigmente enthalten vorzugsweise clusterförmige Pigmentteilchen, deren Cluster mindestens fünf miteinander verwachsene kugelähnliche Teile enthalten.

Die Eisenoxidrotpigmente enthalten vorzugsweise 0,5 bis 10 Mol % einer Verbindung aus der Gruppe Mg, Zn, Al, La, Y, Zr, Sn, und/oder Ca, bezogen auf die Eisenoxidrotpigmente.

Mg, Zn, Al, La, Y, Zr, Sn, und/oder Ca sind vorzugsweise an der Oberfläche und im Eisenoxidrotpigment enthalten.

Gegenstand der Erfindung ist auch ein Verfahren zur Herstellung von Eisenoxidrotpigmenten, dadurch gekennzeichnet, dass
- ein Eisenoxidgelbpigment, das auf Basis eines Eisenoxidgelbkeims aufgebaut wurde, in Gegenwart von;
- Mg, Zn, Al, La, Y, Zr, Sn und/oder Ca beschichtet wird, insbesondere durch Aufsprühen, Aufmahlen und/oder Auffällen, so dass der Gehalt an Elementen aus der Gruppe Mg, Zn, Al, La, Y, Zr, Sn und/oder Ca 0,5 bis 10 Mol %, bezogen auf den Gesamteisengehalt des Eisenoxidgelbpigments, beträgt;
- das Eisenoxidgelbpigment zu Rotklinker geglüht wird;
- und der Rotklinker zu Eisenoxidrotpigment gemahlen wird.

Die als Vorprodukt eingesetzten Eisenoxidgelbpasten können vorzugsweise gemäß der DE A1 3326 632 A1 hergestellt werden und enthalten hochverzweigte Pigmentteilchen.

Ein bevorzugtes Verfahren zur Herstellung der erfindungsgemäßen Eisenoxidpigmente ist dadurch gekennzeichnet, dass die Herstellung des Eisenoxidgelbkeims des zur Beschichtung bestimmtem Eisenoxidgelbpigments (α-FeOOH) in Gegenwart von Verbindungen der Elemente B, Al, Ga, Si, Ge und/oder Sn in Mengen von 0,05 bis 10 Gew.-%, berechnet als Oxide entsprechend der maximalen Wertigkeit der Elemente, bezogen auf den rechnerisch ausgefällten α-FeOOH-Keim, erfolgt, der Pigmentbildungsschritt in für den Fachmann üblicher Weise erfolgt, von dem dabei entstehenden Gelbschlamm die Salzlauge abgetrennt, die isolierte Eisenoxidgelbpaste vor der Glühung zum Eisenoxidrotpigment beschichtet wird.

Dabei wird zunächst vorzugsweise gemäß DE A1 3 326 632 ein Keim mit Ausfällgraden von 20 bis 70 % in Gegenwart von Verbindungen der Elemente B, Al, Ga, Si, Ge und/oder Sn bei Temperaturen von Raumtemperaturen bis 70 °C erzeugt. Auf diesen Keim lässt man ein Pigment aufwachsen. Die Pigmentbildung zum Eisenoxidgelb kann nach Penniman in Gegenwart von metallischem Eisen, nach dem Anilinverfahren oder nach dem Fällverfahren erfolgen. Bei dem Fällverfahren kann man durch Vorfällung gereinigte Eisensalze einsetzen.

Beim Fällverfahren erfolgt die Pigmentbildung vorzugsweise bei konstantem pH-Wert im Bereich 2,8 bis 4,5 oder unter stufenweiser Erhöhung des pH-Wertes während der Pigmentbildung von Werten < 3 in 0,1 bis 0,2 Einheiten/Stufe auf Werte von 3,8 bis 4,5.

Nach Beendigung der Pigmentbildung erhält man als Vorprodukt zur Herstellung der neuartigen Eisenoxidrotpigmente salzhaltige Gelbschlämme, die bevorzugt salzarm gewaschen und ggf. getrocknet werden können.

Die Beschichtung der erfindungsgemäß als Zwischenstufe erhaltenen Gelbpigmente mit einer farblosen Beschichtung von 0,5 bis 10 Mol % von Mg, Zn, Al, La, Y, Zr, Sn und Ca erfolgt so, dass auf die Eisenoxidgelbpigmente eine Beschichtung einer Verbindung eines oder mehrerer Elemente aus der Gruppe Mg, Zn, Al, La, Y, Zr, Sn, Ca durch Aufsprühen, Aufmahlen und/oder Auffällen so erfolgt, dass der Gehalt an Elementen aus der Gruppe Mg, Zn, Al, La, Y, Zr, Sn, Ca 0,5 bis 10 Mol %, bezogen auf den Gesamteisengehalt der Gelbpigmente, beträgt.

Beim Glühen des beschichteten Zwischenproduktes wirken sich in bekannter Weise die Teilchengröße des Zwischenproduktes, die Art und Menge der Beschichtung, der Temperaturverlauf und die Verweilzeit auf die Koloristik des resultierenden Eisenoxidrotpigmentes aus.

Das Ofenprodukt, der Rotklinker, wird in technisch üblicher Weise gemahlen, wobei der Fachmann aus einer Vielzahl von Mahlaggregaten wählen kann. Beispielhaft, jedoch ohne Einschränkung seien Luftstrahl-, Dampfstrahl-, Raymond- und Perlmühle genannt.

Überraschenderweise erhält man nach der Mahlung Eisenoxidrotpigmente, die sich durch hohe Farbreinheit bei gleichzeitiger hoher Mahlstabilität und guter Dispergierbarkeit von herkömmlichen, bekannten Eisenoxidrotpigmenten unterscheiden.

Die Erfindung betrifft auch die Verwendung der Eisenoxidrotpigmente zur Einfärbung von Erzeugnissen der Farben-, Lack-, Beschichtungs-, Baustoff, Kunststoff- und Papierindustrie. Die erfindungsgemäßen Eisenoxidrotpigmente können ferner in Lebensmitteln und in Produkten der Pharmaindustrie, wie beispielsweise in Tabletten, verwendet werden.

Anhand der nachfolgenden Beispiele wird die Erfindung näher erläutert, ohne das dadurch eine Einschränkung der Erfmdung bewirkt werden soll.

### Beispiele

### Beschreibung der verwendeten Messmethoden

Die Prüfungen wurden beispielhaft in einem mittelöligen Alkydharz (Alkydal® F 48, Bayer Polymers, Leverkusen) durchgeführt. Zur Dispergierung wurde die Pigmentpräparation in der dem Fachmann bekannten Weise im Dissolver vorgemischt und anschließend in einem Farbenmischer rm5000 der Fa. Olbrich, D-58675 Hemer, mit Glasperlen (⌀ 1 mm) mit den angegeben Zeiten geschüttelt. Die Pigmentpasten wurden aufgelackt und mit einem Handrakel in einer Schichtstärke von 120 µm auf einem beschichteten Weißkarton appliziert. Zur Untersuchung der Aufhellung wurde die Mischung aus Rotlack und Weißlack in gleicher Weise auf einen beschichteten Weißkarton appliziert. Nach einer mindestens 16-stündigen Trocknung bei Raumtemperatur wurden die Proben farbmetrisch ausgewertet. Die Farbmessung erfolgte mit einem Dataflash® 2000 der Fa. Datacolor. Die Farbabstände wurden nach DIN 6174 (CIELAB-Werte) bestimmt.

### Herstellung der roten Pigmentpaste

87,5 g mittelöliges, luftrockendes Alkydharz auf Basis trocknender pflanzlicher Fettsäuren in Testbenzin/Xylol, Bayer Polymers AG, 6,0 g aromatisches Kohlenwasserstoffgemisch, hauptsächlich bestehend aus Trimethyl-, Propyl- und Methylethylbenzyne mit den Formel C₆H₃(CH₃)₃) und 175 g Rotpigment in eine 250 ml Weißblechdose (7,5 cm) einwiegen und mit einem Dissolver 10 Minuten lang bei 5000 upm vordispergieren (Scheibe 4 cm; Randgeschwindigkeit ca. 10,5 m/s).

140 g der o.g. Mischung und 230 g Glasperlen in eine 250 ml Weithalsglasflasche mit Schraubverschluss einwiegen und mit einem Farbenmischer rm5000, Fa. Olbrich (in der Folge "Olbrich-Shaker") schütteln. Nach Ende der Dispergierzeit Glasperlen absieben und Pigmentpaste auflacken.

### Herstellung der Auflacklösung

253,9 g mittelöliges, luftrockendes Alkydharz auf Basis trocknender pflanzlicher Fettsäuren in Testbenzin/Xylol, Bayer Polymers AG, 20,6 g Solventnaphta 100, 5,7 g Methoxypropylacetat, 2,4 g Hautverhinderungsmittel enthaltend 2-Butanonoxim, 55 %ig in Testbenzin, Borchers GmbH, 4,9 g Verlaufshilfsmittel auf Siliconbasis enthaltend Polydimethylsiloxan und Octamethylcyclotetrasiloxan, Borchers GmbH, 1%ig in Xylol und 11,3 g Mischmetall Trockener (Sikkativ) enthaltend Kobaltoktoat, Calciumoktoat, Zinkoktoat und Zirkoniumoktoat in Mischung gelöst in Testbenzin mit maximal 1 % Aromatengehalt, Borchers GmbH, in ein geeignetes Gefäß einwiegen und gut homogenisieren.

### Auflackung

7,5 g Pigmentpaste und 16,0 g Auflacklösung in einen geeigneten Gefäß intensiv mischen.

### Herstellung des Weißlacks zur Aufhellung

35,0 mittelöliges, luftrockendes Alkydharz auf Basis trocknender pflanzlicher Fettsäuren in Testbenzin/Xylol, Bayer Polymers AG, 30,0 g Solventnaphta 100, 100 g Titandioxid Weißpigment, Kerr McGee und 230 g Glasperlen in eine 250 ml Weithalsglasflasche mit Schraubverschluss einwiegen und 30 Minuten mit einem Farbenmischer rm5000, Fa. Olbrich schütteln. Nach Ende der Dispergierzeit Glasperlen absieben und mit einer homogenen Mischung aus 226,2 g mittelöliges, luftrockendes Alkydharz auf Basis trocknender pflanzlicher Fettsäuren in Testbenzin/Xylol, Bayer Polymers AG, 16,0 g Solventnaphta 100, 8,0 g Methoxypropylacetat, 2,15 g Hautverhinderungsmittel enthaltend 2-Butanonoxim, 55 %ig in Testbenzin, Borchers GmbH, 4,3 g Verlaufshilfsmittel auf Siliconbasis, Borchers GmbH, 1%ig in Xylol und 10,0 g Mischmetall Trockener (Sikkativ) enthaltend Kobaltoktoat, Calciumoktoat, Zinkoktoat und Zirkoniumoktoat in Mischung gelöst in Testbenzin mit maximal 1 % Aromatengehalt, Borchers GmbH, auflacken.

### Herstellung der Weißabtönung (Aufhellung)

2,76 g Rotlack mit 10,76 g Weißlack in einem geeigneten Gefäß intensiv mischen.

### Bestimmung der Dispergierbarkeit

Der nach oben beschriebener Methode im Olbrich-Shaker dispergierte Lack wird auf das obere Ende des kurz zuvor sauber gewischten Grindometer-Blocks gelegt und mit dem Schaber im rechten Winkel langsam nach unten abgezogen. Die Körnigkeit muss sofort abgelesen werden. Die Auswertung erfolgt in Anlehnung an DIN ISO 1524 (2002) in der erweiterten Form als "3-Kästchen-Methode" gemäß der Prüfmethode Nr. 004 vom 1995-05-15 (Bayer Chemicals, Business Unit Inorganic Pigments) wie folgt:
- Arbeitsgeräte: Pendraulik-Rührwerk Dissolverscheibe, ⌀ 40 mm
Weißblechdose, 250 ml
Grindometer-Block, 0-100 µm
Waage
Kurzzeitwecker
Spatel
Schnappdeckelfläschchen
- Hilfsmittel: Alkydal® F 681, 75%ig in Testbenzin
Alkydal® F 681, 45%ig in Testbenzin

### Arbeitsweise

### Mahlgutformulierungen der Bayferrox-Pigmente

| | Rot- und Schwarzpigmente | Gelbpigmente |
|---|---|---|
| Alkydal® F 681, 75%ig | 100 g | 110 g |
| Bayferrox® | 220 g | 70 g |
| Ausnahme: 110 M | 180 g | |

Bindemittel wird im Rührgefäß vorgelegt, das Pigment bei 1000 U/min portionsweise zugegeben und untergerührt. Die Rührwelle, Dissolverscheibe und Dosenrand werden mit dem Spatel bzw. Kartenblatt von nicht benetzten Pigmentteilchen gesäubert. Anschließend wird die Dispergiervorrichtung im Rührwerk zentrisch unter Einhaltung des Abstandes vom Boden fixiert und das Mahlgut bei 5000 U/min 10 min lang dispergiert.

In einer kleiner verschließbaren Flasche wird das Mahlgut mit einer 45%igen Alkydal® F 681-Bindemittellösung in Testbenzin im Verhältnis 1 : 1 intensiv gemischt. Die verdünnte Probe wird auf das obere Ende des kurz zuvor sauber gewischten Grindometer-Blocks gelegt und mit dem Schaber im rechten Winkel langsam nach unten abgezogen. Durch das gleichmäßige Ziehen des Schabers wird die Probe in der Rinne, die eine Einteilung von 0 - 100 µm aufweist, ausgestrichen. Die Körnigkeit muss sofort abgelesen werden.

### Auswertung

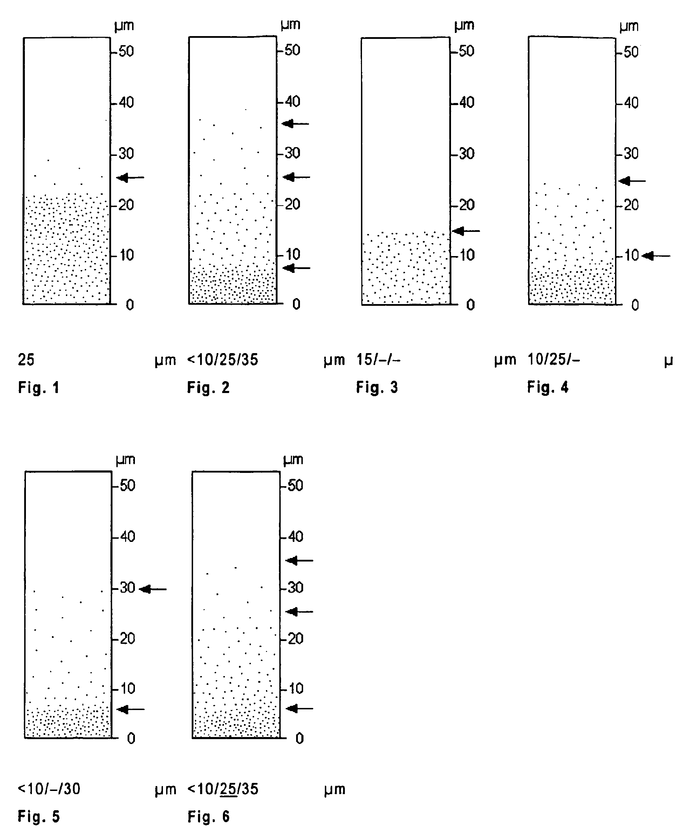

Die Methode wird beschrieben in DIN ISO 1524, "Bestimmung der Mahlfeinheit (Körnigkeit)", und als charakteristischer Kennwert wird danach der Wert abgelesen (in µm), "unterhalb dessen eine größere Anzahl von Pigmentkörnern als Stippen oder Kratzer auf der Oberfläche (des ausgestrichenen Lackes) sichtbar wird. Einzelne, zufällig aufgetretene Stippen oder Kratzer werden dabei nicht berücksichtigt (Fig. 1)."

Die zur Prüfung der Pigmente angewandte Methode "3-Kästchen-Methode" ist eine erweiterte Form der Ablesung, bei der als Ergebnis drei Werte angegeben werden.

Der Hauptbereich in Form eines dichten geschlossenen Stippenfeldes, darüber ein Gebiet mit mittelhoher Stippenkonzentration und schließlich wiederum darüber ein Gebiet mit sehr geringer Stippenkonzentration (nahezu Einzelstippen, die allerdings reproduzierbar auftreten) (Fig. 2).

Deshalb wird ein Werte-Tripel festgehalten, das die oberen Grenzen der angeführten drei Bereiche charakterisiert. Ein Grindometeraufstrich gemäß Fig. 2 wird danach in folgender Weise beurteilt: < 10/25/35 µm.

Die drei Werte lassen durch ihre Position innerhalb des Tripels klar erkennen, welcher Art der drei Stippenfelder sie zuzuordnen sind. Tritt in speziellen Fällen einer der drei Bereiche nicht auf, so erscheint an der betreffenden Stelle ein Strich (Beispiele hierzu s. Fig. 3, 4 und 5).

Ist die Stippenkonzentration in einem Bereich bemerkenswert hoch (ohne jedoch die Dichte des Nachbarbereiches zu erreichen), so ist dies durch Unterstreichen des betreffenden Grenzwertes anzugeben. Ein Beispiel hierzu zeigt Fig. 6 (im Vergleich zu Fig. 2).

### Beispiel 1 (Vergleich)

Die als Vorprodukt eingesetzten Eisenoxidgelbpasten oder Suspensionen wurde gemäß der DE-A 3 326 632 Al Beispiel 2 hergestellt und enthalten hochverzweigte Pigmentteilchen.

Das als Suspension oder Paste anfallende Material wird über eine Filterpresse filtriert und anschließend mit VE-Wasser bis zu einer Leitfähigkeit von < 2 mS im Filtrat gewaschen. 50 kg des Filterkuchens werden in einem 1501-Fass mit 50 1 Wasser aufgerührt und anschließend getrocknet. 5 kg des getrockneten Materials wurden anschließend bei 740°C (gemessen im Produkt) in einer geeigneten Apparatur für 30 Minuten nach Erreichen der Produkttemperatur geglüht.

Das geglühte Material wurde in einer Drageetrommel vorgelegt und 1 g 50%ige Trimethylolpropan-lösung in Wasser pro 100 g Pigment mittels Zweistoffdüse gleichmäßig aufgesprüht. Die anschließende Dampfstrahlmahlung erfolgte in einer Dampfstrahlmühle der Firma Alpine (Innendurchmesser 25 cm) mit einer Produktaufgabe von 10 kg/h bei 18 kg/h Treibdampf und 45 kg/h Mahldampf.

### Beispiel 2

Die als Vorprodukt eingesetzten Eisenoxidgelbpasten wurde gemäß der DE-A 3 326 632 Al Beispiel 2 hergestellt und enthalten hochverzweigte Pigmentteilchen.

Das als Suspension oder Paste anfallende Material wird über eine Filterpresse filtriert und anschließend mit VE-Wasser bis zu einer Leitfähigkeit von < 2 mS im Filtrat gewaschen. 50 kg des Filterkuchens werden in einem 150 1-Fass mit 50 1 Wasser aufgerührt und unter Rühren innerhalb von 15 Minuten 1,07 1 Aluminiumsulfatlösung (Konzentrationen 100 g/l Al gerechnet als Al₂O₃) hinzugefügt. Der pH-Wert der Suspension lag nach der Zugabe bei 3,2. Anschließend wurde 0,723 1 Natrium-Aluminatlösung (Konzentration 300 g/l gerechnet als Al₂O₃) innerhalb von 15 Minuten hinzugefügt. Der pH-Wert der Suspension lag anschließend bei 7,03. Abschließend wurde mit Natronlauge (NaOH) auf einen pH-Wert von 8,5 eingestellt und 60 Minuten nachgerührt. Im Anschluss an die Nachrührzeit wurde über eine Filterpresse filtriert und mit Wasser auf eine Leitfähigkeit von < 500 µS gewaschen. Der Filterkuchen wurde anschließend bei 120°C getrocknet. 5 kg des getrockneten Materials wurden anschließend bei 750°C (gemessen im Produkt) in einer geeigneten Apparatur für 30 Minuten nach Erreichen der Produkttemperatur geglüht.

Das geglühte Material wurde in einer Drageetrommel vorgelegt und 1 g 50%ige Trimethylolpropan-Lösung in Wasser pro 100 g Pigment mittels Zweistoffdüse gleichmäßig aufgesprüht. Die anschließende Dampfstrahlmahlung erfolgte in einer Dampfstrahlmühle der Firma Alpine (Innendurchmesser 25 cm) mit einer Produktaufgabe von 10 kg/h bei 18 kg/h Treibdampf und 45 kg/h Mahldampf.

Das so erhaltene Fertiggut wurde gemäß der o.g. Abtestmethoden getestet.

### Beispiel 3

Die als Vorprodukt eingesetzten Eisenoxidgelbpasten wurden gemäß der DE-A 3 326 632 A1, Beispiel 2 hergestellt und enthalten hochverzweigte Pigmentteilchen.

Das als Suspension oder Paste anfallende Material wird über eine Filterpresse filtriert und anschließend mit VE-Wasser bis zu einer Leitfähigkeit von < 2 mS im Filtrat gewaschen. 50 kg des Filterkuchens werden in einem 1501-Fass mit 50 1 Wasser aufgerührt und unter Rühren innerhalb von 15 Minuten 2,14 1 Aluminiumsulfatlösung (Konzentration 100 g/l Al gerechnet als Al₂O₃) hinzugefügt. Der pH-Wert der Suspension lag nach der Zugabe bei 3,08. Anschließend wurde 1,451 Natrium-Aluminatlösung (Konzentration 300 g/l gerechnet als Al₂O₃) innerhalb von 15 Minuten hinzugefügt. Der pH-Wert der Suspension lag anschließend bei 8,4. Abschließend wurde mit Natronlauge (NaOH) auf einen pH-Wert von 8,5 eingestellt und 60 Minuten nachgerührt. Im Anschluss an die Nachrührzeit wurde über eine Filterpresse filtriert und mit Wasser auf eine Leitfähigkeit von < 500 µS gewaschen. Der Filterkuchen wurde anschließend bei 120°C getrocknet. 5 kg des getrockneten Materials wurden anschließend bei 790°C (gemessen im Produkt) in einer geeigneten Apparatur für 30 Minuten nach Erreichen der Produkttemperatur geglüht.

Das geglühte Material wurde in einer Drageetrommel vorgelegt und 1 g 50%ige Trimethylolpropan-Lösung in Wasser pro 100 g Pigment mittels Zweistoffdüse gleichmäßig aufgesprüht. Die anschließende Dampfstrahlmahlung erfolgte in einer Dampfstrahlmühle der Firma Alpine (Innendurchmesser 25 cm) mit einer Produktaufgabe von 10 kg/h bei 18 kg/h Treibdampf und 45 kg/h Mahldampf.

Das so erhaltene Fertiggut wurde gemäß der o.g. Abtestmethoden getestet.

### Beispiel 4

Die als Vorprodukt eingesetzten Eisenoxidgelbpasten wurden gemäß der DE-A 3 326 632 Al Beispiel 2 hergestellt und enthalten nadelförmige, hochverzweigte Pigmentteilchen.

Das als Suspension oder Paste anfallende Material wird über eine Filterpresse filtriert und anschließend mit VE-Wasser bis zu einer Leitfähigkeit von < 2 mS im Filtrat gewaschen. 50 kg des Filterkuchens werden in einem 150 1-Fass mit 50 1 Wasser aufgerührt und unter rühren innerhalb von 15 Minuten 3,21 1 Aluminiumsulfatlösung (Konzentration 100 g/l Al gerechnet als Al₂O₃) hinzugefügt. Der pH-Wert der Suspension lag nach der Zugabe bei 3,14. Anschließend wurde 1,341 Natrium-Aluminatlösung (Konzentration 300 g/l gerechnet als Al₂O₃) innerhalb von 15 Minuten hinzugefügt. Der pH-Wert der Suspension lag anschließend bei 5,4. Abschließend wurde mit Natronlauge (NaOH) auf einen pH-Wert von 8,5 eingestellt und 60 Minuten nachgerührt. Im Anschluss an die Nachrührzeit wurde über eine Filterpresse filtriert und mit Wasser auf eine Leitfähigkeit von < 500 µS gewaschen. Der Filterkuchen wurde anschließend bei 120°C getrocknet. 5 kg des getrockneten Materials wurden anschließend bei 800°C (gemessen im Produkt) in einer geeigneten Apparatur für 30 Minuten nach Erreichen der Produkttemperatur geglüht.

Das geglühte Material wurde in einer Drageetrommel vorgelegt und 1 g 50%ige Trimethylolpropan-Lösung in Wasser pro 100 g Pigment mittels Zweistoffdüse gleichmäßig aufgesprüht. Die anschließende Dampfstrahlmahlung erfolgte in einer Dampfstrahlmühle der Firma Alpine (Innendurchmesser 25 cm) mit einer Produktaufgabe von 10 kg/h bei 18 kg/h Treibdampf und 45 kg/h Mahldampf.

Das so erhaltene Fertiggut wurde gemäß der o.g. Abtestmethoden getestet.

### Vergleichsbeispiele

Vergleichspigment ist das im Handel erhältliche Copperas Red®R1599D der Firma Elementis.

**Tabelle 1: Prüfergebnisse**

| **Abtestung in F48 (Aufhellung) gemäß DIN 6174; Angabe in CIELAB-Einheiten.** | | | | | | |
|---|---|---|---|---|---|---|
| **Probe** | **Anreibung Olbrich- Shaker (in Minuten)** | **a*** | **b*** | **Farbtonabstand Δ a* im Vergleich zu einer 10- minütigen Dissolver- Anreibung** | **Farbtonabstand Δ b* im Vergleich zu einer 10- minütigen Dissolver- Anreibung** | **Bunttonabstand Δ h* im Vergleich zu einer 10- minütigen Dissolver- Anreibung** |
| R1599D | 15' | 27,04 | 18,35 | 0,23 | 0,39 | 0,20 |
| R1599D | 120' | 28,01 | 21,14 | 1,15 | 2,58 | 1,47 |
| Beispiel 1 Vergleich | 15' | 26,57 | 16,71 | 0,42 | 0,56 | 0,26 |
| Beispiel 1 Vergleich | 120' | 27,42 | 19,00 | 1,25 | 2,45 | 1,40 |
| Beispiel 2 | 15' | 26,73 | 28,21 | 0,29 | 0,46 | 0,23 |
| Beispiel 2 | 120' | 27,17 | 19,42 | 0,87 | 1,69 | 0,93 |
| Beispiel 3 | 15' | 26,56 | 18,50 | 0,27 | 0,52 | 0,28 |
| Beispiel 3 | 120' | 27,13 | 20,02 | 0,70 | 1,48 | 0,83 |
| Beispiel 4 | 15' | 26,56 | 18,49 | 0,26 | 0,40 | 0,19 |
| Beispiel 4 | 120' | 27,19 | 20,37 | 0,75 | 1,67 | 0,95 |

Alle in Tabelle 1 genannten Beispiele und Vergleichsbeispiele, sowie das Vergleichspigment R1599D haben einen ausgeprägteren Rot-Wert a* als Bayferrox® 110M der Firma Bayer Chemicals AG, das mit a*=25,66 in F48 Aufhellung, bei 15 Minuten Olbrich-Shaker gemäß DIN 6174 bestimmt wurde. Bayferrox® 110M der Firma Bayer Chemicals AG dient als Bezug für den Farbort a* für die genannten Beispiele und Vergleichsbeispiele. Durch einfache Differenzbildung zwischen den bei 15 Minuten Olbrich-Shaker ermittelten a*-Werten und dem a*-Wert von 25,66 für Bayferrox® 110M lässt sich der Farbtonabstand des Vergleichspigmentes der Vergleichsbeispiele und der erfindungsgemäßen Beispiele errechnen.

**Tabelle 2: Vergleich der Dispergierbarkeit**

| **Probe** | **Dispergierzeit** | **Dispergierwert in µm** |
|---|---|---|
| Beispiel 1 Vergleich | 30' Olbrich-Shaker | 15-30-40 |
| Beispiel 2 | 30' Olbrich-Shaker | 10-25-30 |
| Beispiel 3 | 30' Olbrich-Shaker | <10-15-30 |
| Beispiel 4 | 30' Olbrich-Shaker | <10-15-25 |
| R1599D | 30' Olbrich-Shaker | <10-10-20 |

Fig. 7 zeigt den Einfluss der Anreibezeit auf a*. Die y-Achse zeigt dabei die Änderung von a*, während die x-Achse die Zeitabstände von 5 min, 15 min, 30 min, 60 min und 120 min, jeweils für die Pigmente R1599D, Beispiel 1 (Vergleich), Beispiel 2, Beispiel 3 und Beispiel 4 darstellt.

Fig. 8 zeigt den Einfluss der Anreibezeit auf b*. Die y-Achse zeigt dabei die Änderung von b*, während die x-Achse die Zeitabstände von 5 min, 15 min, 30 min, 60 min und 120 min, jeweils für die Pigmente R1599D, Beispiel 1 (Vergleich), Beispiel 2, Beispiel 3 und Beispiel 4 darstellt.

Fig. 9 zeigt den Einfluss der Anreibezeit auf h*. Die y-Achse zeigt dabei die Änderung von h*, während die x-Achse die Zeitabstände von 5 min, 15 min, 30 min, 60 min und 120 min, jeweils für die Pigmente R1599D, Beispiel 1 (Vergleich), Beispiel 2, Beispiel 3 und Beispiel 4 darstellt.

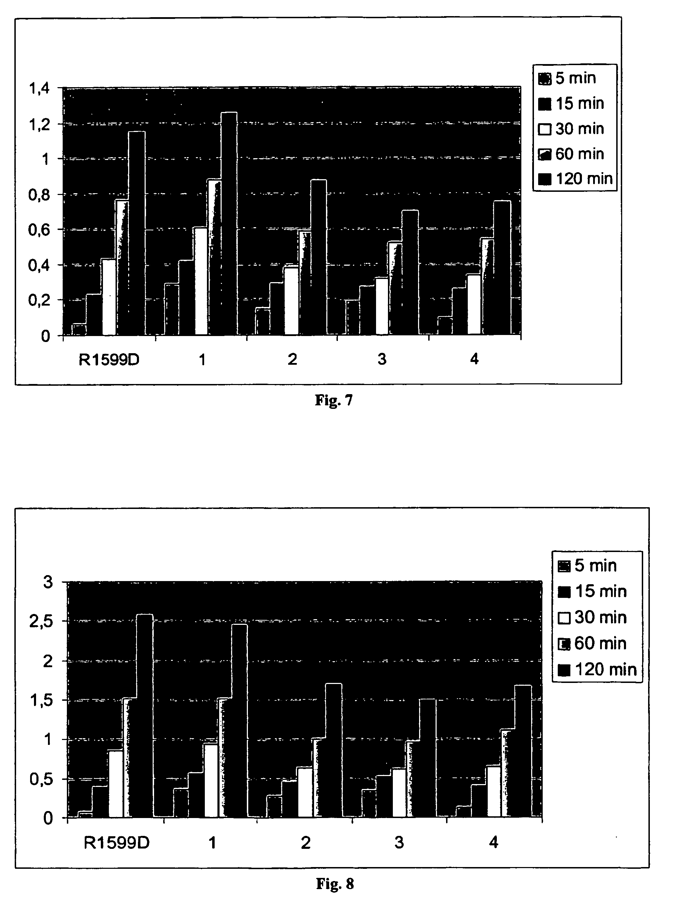

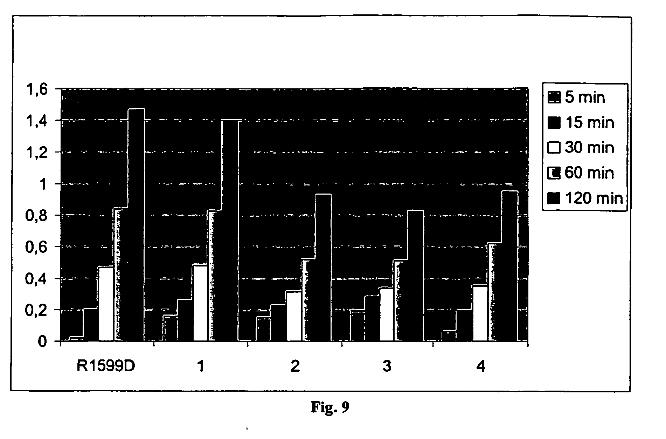

Die Fig. 7-9 belegen, dass die erfindungsgemäßen Eisenoxidrotpigmente eine höhere Mahlstabilität aufweisen als der Stand der Technik.

## Patentansprüche

1. Eisenoxidrotpigmente mit einen a*-Wert, gemessen in Aufhellung nach CIELAB-Einheiten gemäß DIN 6174 nach einer 15-minütigen Anreibung im Olbrich-Shaker von 26,5 bis 30, **dadurch gekennzeichnet, dass** die Eisenoxidrotpigmente 0,5 bis 10 Mol % einer Verbindung aus der Gruppe Mg, Zn, Al, La, Y, Zr, Sn, und/oder Ca, bezogen auf die Eisenoxidrotpigmente, enthalten, wobei Mg, Zn, Al, La, Y, Zr, Sn, und/oder Ca an der Oberfläche und im Eisenoxidrotpigment enthalten sind und dass die Eisenoxidrotpigmente bei einer Lackanreibung im Olbrich-Shaker bei einer Erhöhung der Dispergierzeit von 15 auf 120 Min einen Bunttonabstand Δ h ab* gemäß DIN 6174 von < 1,1 aufweisen.

2. Eisenoxidrotpigmente nach Anspruch 1, **dadurch gekennzeichnet, dass** die Eisenoxidrotpigmente bei einer Lackanreibung im Olbrich-Shaker bei einer Erhöhung der Dispergierzeit von 15 auf 120 Min einen Bunttonabstand Δ h ab* gemäß DIN 6174 von <0,8 aufweisen.

3. Eisenoxidrotpigmente nach Anspruch 1 oder 2, **dadurch gekennzeichnet, dass** sie bei einer Lackanreibung im Olbrich-Shaker bei einer Erhöhung der Dispergierzeit von 15 auf 120 Min einen Farbtonabstand Δ a gemäß DIN 6174 von < 0,8, insbesondere < 0,6 aufweisen.

4. Eisenoxidrotpigmente nach wenigstens einem der Ansprüche 1 bis 3, **dadurch gekennzeichnet, dass** sie bei einer Lackanreibung im Olbrich-Shaker bei einer Erhöhung der Dispergierzeit von 15 auf 120 Min einen Farbtonabstand Δ b gemäß DIN 6174 von < 1,8, insbesondere < 1,3 aufweisen.

5. Eisenoxidrotpigmente nach wenigstens einem der Ansprüche 1 bis 4, **dadurch gekennzeichnet, dass** die Eisenoxidrotpigmente clusterförmige Pigmentteilchen enthalten, deren Cluster mindestens fünf miteinander verwachsene kugelähnliche Teile enthalten.

6. Verfahren zur Herstellung von Eisenoxidrotpigmenten nach wenigstens einem der Ansprüche 1 bis 5, **dadurch gekennzeichnet, dass**
• ein Eisenoxidgelbpigment, das auf Basis eines Eisenoxidgelbkeims aufgebaut wurde, in Gegenwart von Verbindungen eines oder mehrerer Elemente aus der Gruppe Mg, Zn, Al, La, Y, Zr, Sn und/oder Ca beschichtet wird, insbesondere durch Aufsprühen, Aufmahlen und/oder Auffällen, so dass durch Beschichtung der Gehalt an Elementen aus der Gruppe Mg, Zn, Al, La, Y, Zr, Sn und/oder Ca 0,5 bis 10 Mol %, bezogen auf den Gesamteisengehalt des Eisenoxidgelbpigments, beträgt;
• das Eisenoxidgelbpigment zu Rotklinker geglüht wird;
• und der Rotklinker zu Eisenoxidrotpigment gemahlen wird,
wobei die Herstellung des Eisenoxidgelbkeims des zur Beschichtung bestimmtem Eisenoxidgelbpigment (α-FeOOH) in Gegenwart von Verbindungen der Elemente B, Al, Ga, Si, Ge und/oder Sn in Mengen von 0,05 bis 10 Gew.%, berechnet als Oxide entsprechend der maximalen Wertigkeit der Elemente, bezogen auf den rechnerisch ausgefällten α-FeOOH-Keim, erfolgt.

7. Verwendung von Eisenoxidrotpigmenten nach wenigstens einem der Ansprüche 1 bis 5 zur Einfärbung von Erzeugnissen der Farben-, Lack-, Beschichtungs-, Baustoff-, Kunststoff- und Papierindustrie, in Lebensmitteln und in Produkten der Pharmaindustrie wie beispielweise in Tabletten.

## Claims

1. Iron oxide red pigments having an a* value, measured in white reduction according to CIELAB units in accordance with DIN 6174, after 15 minutes of dispersing in an Olbrich shaker, of from 26.5 to 30, **characterized in that** the iron oxide red pigments contain 0.5 to 10 mol% of a compound from the group Mg, Zn, Al, La, Y, Zr, Sn and/or Ca, based on the iron oxide red pigments Mg, Zn, Al, La, Y, Zr, Sn and/or Ca being present on the surface and in the iron oxide red pigment, and **in that** the iron oxide red pigments on paint dispersion in an Olbrich shaker, with an increase in the dispersing time from 15 to 120 minutes, exhibit a hue difference Δ h ab* in accordance with DIN 6174 of < 1.1.

2. Iron oxide red pigments according to Claim 1, **characterized in that** the iron oxide red pigments on paint dispersion in an Olbrich shaker, with an increase in the dispersing time from 15 to 120 minutes, exhibit a hue difference Δ h ab* in accordance with DIN 6174 of < 0.8.

3. Iron oxide red pigments according to Claim 1 or 2, **characterized in that** on paint dispersion in an Olbrich shaker, with an increase in the dispersing time from 15 to 120 minutes, they exhibit a shade difference Δ a in accordance with DIN 6174 of < 0.8, in particular < 0.6.

4. Iron oxide red pigments according to at least one of Claims 1 to 3, **characterized in that** on paint dispersion in an Olbrich shaker, with an increase in the dispersing time from 15 to 120 minutes, they exhibit a shade difference Δ b in accordance with DIN 6174 of < 1.8, in particular < 1.3.

5. Iron oxide red pigments according to at least one of Claims 1 to 4, **characterized in that** the iron oxide red pigments comprise clustered pigment particles whose clusters comprise at least five bead-like parts merged with one another.

6. Process for preparing iron oxide red pigments according to at least one of Claims 1 to 5, **characterized in that**
• an iron oxide yellow pigment built up on the basis of an iron oxide yellow seed is coated in the presence of compounds of one or more elements from the group Mg, Zn, Al, La, Y, Zr, Sn and/or Ca, in particular by spraying on, grinding on and/or precipitating on, so that, by coating, the amount of elements from the group Mg, Zn, Al, La, Y, Zr, Sn and/or Ca is 0.5 to 10 mol%, based on the total iron content of the iron oxide yellow pigment;
• the iron oxide yellow pigment is calcined to give red clinker;
• and the red clinker is ground to iron oxide red pigment,
the preparation of the iron oxide yellow seed of the iron oxide yellow pigment (α-FeOOH) intended for coating taking place in the presence of compounds of the elements B, Al, Ga, Si, Ge and/or Sn in amounts of 0.05% to 10% by weight, calculated as oxides in accordance with the maximum valency of the elements, based on the arithmetically precipitated α-FeOOH seed.

7. Use of iron oxide red pigments according to at least one of Claims 1 to 5 for colouring products of the paint, varnish, coatings, building material, plastics and paper industries, in foods and in products of the pharmaceutical industry such as in tablets, for example.

## Revendications

1. Pigments rouges à base d'oxyde de fer, ayant une valeur a*, mesurée en éclaircissement selon les unités CIELAB conformément à DIN 6174 après un broyage pendant 15 minutes dans le secoueur Olbrich, de 26,5 à 30, **caractérisés en ce que** les pigments rouges à base d'oxyde de fer contiennent 0,5 à 10 % en moles d'un composé choisi dans le groupe constitué par Mg, Zn, Al, La, Y, Zr, Sn et/ou Ca, par rapport aux pigments à base d'oxyde de fer, Mg, Zn, Al, La, Y, Zr, Sn et/ou Ca étant contenus sur la surface et dans le pigment à base d'oxyde de fer, et **en ce que** dans le cas d'un broyage de peinture dans le secoueur Olbrich avec une augmentation du temps de dispersion de 15 à 120 min les pigments rouges d'oxyde de fer présentent une différence de teinte Δ h ab* selon DIN 6174 de < 1,1.

2. Pigments rouges à base d'oxyde de fer selon la revendication 1, **caractérisés en ce que** dans le cas d'un broyage de peinture dans le secoueur Olbrich avec une augmentation du temps de dispersion de 15 à 120 min les pigments rouges d'oxyde de fer présentent un écart de teinte Δ h ab* selon DIN 6174 de < 0,8.

3. Pigments rouges à base d'oxyde de fer selon la revendication 1 ou 2, **caractérisés en ce que** dans le cas d'un broyage de peinture dans le secoueur Olbrich avec une augmentation du temps de dispersion de 15 à 120 min, ils présentent un écart de teinte Δ a selon DIN 6174 de < 0,8, en particulier de < 0,6.

4. Pigments rouges à base d'oxyde de fer selon au moins l'une des revendications 1 à 3, **caractérisés en ce que** dans le cas d'un broyage de peinture dans le secoueur Olbrich avec une augmentation du temps de dispersion de 15 à 120 min, ils présentent un écart de teinte Δ b selon DIN 6174 de < 1,8, en particulier < 1,3.

5. Pigments rouges à base d'oxyde de fer selon au moins l'une des revendications 1 à 4, **caractérisés en ce que** les pigments rouges à base d'oxyde de fer contiennent des particules de pigment en forme d'agglomérats, dont les agglomérats contiennent au moins cinq éléments sphéroïdes réunis.

6. Procédé pour la production de pigments rouge à base d'oxyde de fer selon au moins l'une des revendications 1 à 5, **caractérisé en ce que**
• on enrobe, en particulier par application par pulvérisation, application par broyage et/ou application par précipitation, un pigment jaune d'oxyde de fer, qui a été élaboré à base d'un germe de jaune d'oxyde de fer, en présence de composés d'un ou plusieurs éléments choisi(s) dans le groupe constitué par Mg, Zn, Al, La, Y, Zr, Sn et/ou Ca, de sorte que par suite de l'enrobage la teneur en éléments choisis dans le groupe constitué par Mg, Zn, Al, La, Y, Zr, Sn et/ou Ca vaut de 0,5 à 10 % en moles, par rapport à la teneur en fer total du pigment jaune d'oxyde de fer ;
• on calcine le pigment jaune d'oxyde de fer en clinker rouge ;
• et on broie le clinker rouge en pigment rouge à base d'oxyde de fer,
la production du germe de jaune d'oxyde de fer du pigment jaune d'oxyde de fer (α-FeOOH) destiné à l'enrobage s'effectuant en présence de composés des éléments B, Al, Ga, Si, Ge et/ou Sn en quantités de 0,05 à 10% en poids, calculées en tant qu'oxydes correspondant à la valence maximale des éléments, par rapport au germe α-FeOOH précipité calculé.

7. Utilisation de pigments rouges à base d'oxyde de fer selon au moins l'une des revendications 1 à 5 pour la coloration de produits de l'industrie des peintures, vernis, revêtements, matériaux de construction, matières plastiques et du papier, dans des produits alimentaires et dans des produits de l'industrie pharmaceutique comme par exemple dans des comprimés.
